# EUROPEAN PATENT APPLICATION

(11) **EP 1 302 931 A1**
(43) Date of publication of application: **16.04.2003**
(21) Application number: 02028936.9
(22) Date of filing: 26.05.2000
(51) Int. Cl.: G11B 5/66

(54) **Magnetic recording medium**

(30) Priority: 08.06.1999 JP 16132999; 07.04.2000 JP 2000107075; 07.04.2000 JP 2000107071; 07.04.2000 JP 2000107076; 07.04.2000 JP 2000107074; 07.04.2000 JP 2000107072
(62) Divisional of application: 00304517.6
(71) Applicant: FUJITSU LIMITED, Kawasaki-shi, Kanagawa 211-8588 (JP)
(72) Inventor: Abarra, E. Noel, c/oFujitsu Limited, Kawasaki-shi, Kanagawa, 211-8588 (JP); Okamoto, Iwao, c/oFujitsu Limited, Kawasaki-shi, Kanagawa, 211-8588 (JP); Mizoshita, Yoshifumi, c/oFujitsu Limited, Kawasaki-shi, Kanagawa, 211-8588 (JP); Yoshida, Yuki, c/oFujitsu Limited, Kawasaki-shi, Kanagawa, 211-8588 (JP); Umeda, Hisashi, c/oFujitsu Limited, Kawasaki-shi, Kanagawa, 211-8588 (JP); Suzuki, Masaya, c/oFujitsu Limited, Kawasaki-shi, Kanagawa, 211-8588 (JP); Akimoto, Hideyuki, c/oFujitsu Limited, Kawasaki-shi, Kanagawa, 211-8588 (JP); Sato, Hisateru, c/oFujitsu Limited, Kawasaki-shi, Kanagawa, 211-8588 (JP); Kaitsu, Isatake, c/oFujitsu Limited, Kawasaki-shi, Kanagawa, 211-8588 (JP)
(74) Representative: Fenlon, Christine Lesley

(57) **Abstract**

A magnetic recording medium (30) comprising: a substrate (31); an underlayer (33) disposed above the substrate; and a magnetic recording layer (37, 35) disposed above the underlayer (33); characterized in that: said magnetic recording layer (37, 35) has a multi-layer structure which is separated into at least upper (37) and lower (35) layers by a non-magnetic separation layer (36); said non-magnetic separation layer (36) is made of a material selected from a group consisting of Ru, Rh, Ir and alloys thereof; and the upper (37) and lower (35) layers of the multi-layer structure (37, 35) separated by the non-magnetic separation layer (36) have magnetization directions which are mutually parallel.

## Description

The present invention generally relates to magnetic recording media,
and more particularly to a magnetic recording medium
suited for high-density recording.

The recording density of longitudinal magnetic recording media, such as magnetic disks, has been increased considerably, due to the reduction of medium noise and the development of magnetoresistive and high-sensitivity spin-valve heads. A typical magnetic recording medium is comprised of a substrate, an underlayer, a magnetic layer, and a protection layer which are successively stacked in this order. The underlayer is made of Cr or a Cr-based alloy, and the magnetic layer is made of a Co-based alloy.

Various methods have been proposed to reduce the medium noise. For example, Okamoto et al., "Rigid Disk Medium For 5 Gbit/in² Recording", AB-3, Intermag '96 Digest,proposes decreasing the grain size and size distribution of the magnetic layer by reducing the magnetic layer thickness by the proper use of an underlayer made of CrMo, and U.S. Patent No.5,693,426 proposes the use of an underlayer made of NiAl. Further, Hosoe et al., "Experimental Study of Thermal Decay in High-Density Magnetic Recording Media", IEEE Trans. Magn. Vol.33, 1528 (1997), for example, proposes the use of an underlayer made of CrTiB. The underlayers described above also promote c-axis orientation of the magnetic layer in a plane which increases the remanent magnetization and the thermal stability of written bits. In addition, proposals have been made to reduce the thickness of the magnetic layer, to increase the resolution or to decrease the transition width between written bits. Furthermore, proposals have been made to decrease the exchange coupling between grains by promoting more Cr segregation in the magnetic layer which is made of CoCr-based alloy.

However, as the grains of the magnetic layer become smaller and more magnetically isolated from each other, the written bits become unstable due to thermal activation and to demagnetizing fields which increase with linear density. Lu et al., "Thermal Instability at 10 Gbit/in² Magnetic Recording", IEEE Trans. Magn. Vol.30, 4230 (1994), demonstrated, by micromagnetic simulation, that exchange-decoupled grains having a diameter of 10 nm and ratio KᵤV/k_{B}T∼60 in 400 kfci di-bits are susceptible to significant thermal decay, where Kᵤ denotes the magnetic anisotropy constant, V denotes the average magnetic grain volume, k_{B} denotes the Boltzmann constant, and T denotes the temperature. The ratio KᵤV/k_{B}T is also referred to as a thermal stability factor.

It has been reported in Abarra et al., "Thermal Stability of Narrow Track Bits in a 5 Gbit/in² Medium", IEEE Trans. Magn. Vol.33, 2995 (1997),that the presence of intergranular exchange interaction stabilizes written bits, by MFM studies of annealed 200 kfci bits on a 5 Gbit/in² CoCrPtTa/CrMo medium. However, more grain decoupling is essential for recording densities of 20 Gbit/in² or greater.

The obvious solution has been to increase the magnetic anisotropy of the magnetic layer. But unfortunately, the increased magnetic anisotropy places a great demand on the head write field which degrades the "overwrite" performance which is the ability to write over previously written data.

In addition, the coercivity of thermally unstable magnetic recording media increases rapidly with decreasing switching time, as reported in He et al., "High Speed Switching in Magnetic Recording Media", J. Magn. Magn. Mater. Vol.155, 6 (1996), for magnetic tape media, and in J. H. Richter, "Dynamic Coervicity Effects in Thin Film Media", IEEE Trans. Magn. Vol.34, 1540 (1997), for magnetic disk media. Consequently, the adverse effects are introduced in the data rate, that is how fast data can be written on the magnetic layer and the amount of head field required to reverse the magnetic grains.

On the other hand, another proposed method of improving the thermal stability increases the orientation ratio of the magnetic layer, by appropriately texturing the substrate under the magnetic layer. For example, Akimoto et al., "Relationship Between Magnetic Circumferential Orientation and Magnetic Thermal Stability", J. Magn. Magn. Mater. vol.193, pp.240-242(1999), in press, report, through micromagnetic simulation, that the effective ratio KᵤV/k_{B}T is enhanced by a slight increase in the orientation ratio. This further results in a weaker time dependence for the coercivity which improves the overwrite performance of the magnetic recording medium, as reported in Abarra et al., "The Effect of Orientation Ratio on the Dynamic Coercivity of Media for >15 Gbit/in² Recording", IEEE Trans. Magn. vol.35, pp.2709-2711, 1999.

Furthermore, keepered magnetic recording media have been proposed for thermal stability improvement. The keeper layer is made up of a magnetically soft layer parallel to the magnetic layer. This soft layer can be disposed above or below the magnetic layer. Oftentimes, a Cr isolation layer is interposed between the soft layer and the magnetic layer. The soft layer reduces the demagnetizing fields in written bits on the magnetic layer. However, coupling the magnetic layer to a continuously-exchanged coupled soft layer defeats the purpose of decoupling the grains of the magnetic layer. As a result, the medium noise increases.

Various methods have been proposed to improve the thermal stability and to reduce the medium noise. However, the proposed methods do not provide a considerable improvement of the thermal stability of written bits, thereby making it difficult to greatly reduce the medium noise. In addition, some of the proposed methods introduce adverse effects on the performance of the magnetic recording medium due to the measures taken to reduce the medium noise.

More particularly, in order to obtain a thermally stable performance of the magnetic recording medium, it is conceivable to (i) increase the magnetic anisotropy constant Kᵤ, (ii) decrease the temperature T or, (iii) increase the grain volume V of the magnetic layer. However, measure (i) increases the coercivity, thereby making it more difficult to write information on the magnetic layer. In addition, measure (ii) is impractical since in magnetic disk drives, for example, the operating temperature may become greater than 60° C. Furthermore, measure (iii) increases the medium noise as described above. As an alternative for measure (iii), it is conceivable to increase the thickness of the magnetic layer, but this would lead to deterioration of the resolution.

Accordingly, it is desirable to provide a magnetic recording medium in which the thermal stability of written bits can be improved without increasing the medium noise, so as to enable reliable high-density recording without introducing adverse effects on the performance of the magnetic recording medium, that is, unnecessarily increasing the magnetic anisotropy.

According to the present invention there is provided a magnetic recording medium comprising:
a substrate ;
an underlayer disposed above the substrate; and
a magnetic recording layer disposed above the underlayer ;
characterized in that:
said magnetic recording layer has a multi-layer structure which is separated into at least upper and lower layers by a non-magnetic separation layer ;
said non-magnetic separation layer is made of a material selected from a group consisting of Ru, Rh, Ir and alloys thereof; and
the upper and lower layers of the multi-layer structure separated by the non-magnetic separation layer have magnetization directions which are mutually parallel.

According to the magnetic recording medium of the present invention, the non-magnetic separation layer which is made of Ru or the like and has a predetermined thickness maintains the magnetic coupling of magnetic recording layers above and below the non-magnetic separation layer to a mutually parallel state. Hence, it is possible to realize a magnetic recording medium having low noise and desired thermal stability. Compared to the conventional magnetic recording medium, this magnetic recording medium has a high reliability and is suited for high-density recording.

Reference will now be made, by way of example, to the accompanying drawings, in which:
FIG. 1 is a cross sectional view showing an important part of a first example of a magnetic recording medium not embodying the present invention;
FIG. 2 is a cross sectional view showing an important part of a second example of a magnetic recording medium not embodying the present invention;
FIG. 3 is a diagram showing an in-plane magnetization curve of a single CoPt layer having a thickness of 10 nm on a Si substrate;
FIG. 4 is a diagram showing an in-plane magnetization curve of two CoPt layers separated by a Ru layer having a thickness of 0.8 nm;
FIG. 5 is a diagram showing an in-plane magnetization curve of two CoPt layers separated by a Ru layer having a thickness of 1.4 nm;
FIG. 6 is a diagram showing an in-plane magnetization curve of two CoCrPt layers separated by a Ru having a thickness of 0.8 nm;
FIG. 7 is a cross sectional view showing an important part of a magnetic storage apparatus;
FIG. 8 is a plan view showing the important part of the magnetic storage apparatus;
FIG. 9 is a diagram showing an in-plane magnetization curve for a magnetic recording medium having a single CoCrPtB layer grown on a NiAl layer on glass;
FIG. 10 is a diagram showing an in-plane magnetization curve for a magnetic recording medium having two ferromagnetic layers of CoCrPtB separated. by a Ru layer having a thickness of 0.8 nm on a NiP coated Al-Mg substrate;
FIG. 11 is a diagram showing an in-plane magnetization curve for a magnetic recording medium having two ferromagnetic layers of CoCrPtB separated by a Ru layer on a NiP coated Al substrate;
FIG. 12 is a diagram showing an in-plane magnetization curve for a magnetic recording medium having three ferromagnetic layers of CoCrPtB separated by a Ru layer between each two adjacent CoCrPtB layers on a NiP coated Al substrate;
FIG. 13 is a diagram showing an in-plane magnetization curve for a magnetic recording medium having two negatively coupled ferromagnetic layers of CoCrPtB separated by a Ru layer, on a NiAl coated glass substrate;
FIG. 14 is a diagram showing an in-plane magnetization curve shown in FIG. 13 in comparison with a magnetic recording medium having a single ferromagnetic layer of CoCrPtB on a NiAl coated glass substrate;
FIG. 15 is a diagram showing signal decays of the magnetic recording media having two and three ferromagnetic layers, in comparison with a signal decay of the magnetic recording medium having the single ferromagnetic layer;
FIG. 16 is a diagram showing M-H curves of the magnetic recording medium having the two negatively coupled ferromagnetic layers at different temperatures;
FIG. 17 is a diagram showing the temperature dependence of the coercivity for the magnetic recording medium having the characteristics shown in FIG. 16;
FIG. 18 is a diagram showing the PW50 dependence on the effective and total ferromagnetic layer thickness of the magnetic recording media having one, two and three ferromagnetic layers;
FIG. 19 is a diagram showing the effective thickness dependence of the change in isolated wave medium SNR;
FIG. 20 is a cross sectional view showing an important part of an embodiment of the magnetic recording medium according to the present invention;
FIG. 21 is a diagram showing the relationship of a ratio Siso/Nm of the isolated wave output (Siso) and medium noise (Nm) of the embodiment of the magnetic recording medium and the thickness of a Ru non-magnetic separation layer;
FIG. 22 is a diagram showing the relationship of a thickness ratio of first and second magnetic recording layers and the ratio Siso/Nm of the isolated wave output (Siso) and medium noise (Nm); and
FIG. 23 is a diagram showing the relationship of the thickness ratio of the first and second magnetic recording layers and a ratio S/Nt of an output (S) and noise (Nt).

S. S. P. Parkin, "Systematic Variation of the Strength and Oscillation Period of Indirect Magnetic Exchange Coupling through the 3d, 4d, and 5d Transition Metals", Phys. Rev. Lett. Vol.67, 3598 (1991) describes several magnetic transition metals such as Co, Fe and Ni that are coupled through thin non-magnetic interlayers such as Ru and Rh. On the other hand, U.S. Patent No.5.701.223 proposes a spin-valve which employs the above described layers as laminated pinning layers to stabilize the sensor.

For a particular Ru or Ir layer thickness between two ferromagnetic layers, the magnetizations can be made parallel or antiparallel. For example, for a structure made up of two ferromagnetic layers of different thickness with antiparallel magnetizations, the effective grain size of a magnetic recording medium can be increased without significantly affecting the resolution. A signal amplitude reproduced from such a magnetic recording medium is reduced due to the opposite magnetizations, but this can be rectified by adding another layer of appropriate thickness and magnetization direction, under the laminated magnetic layer structure, to thereby cancel the effect of one of the layers. As a result, it is possible to increase the signal amplitude reproduced from the magnetic recording medium, and to also increase the effective grain volume. Thermally stable written bits can therefore be realized.

The thermal stability of written bits may be increased by exchange coupling the magnetic layer to another ferromagnetic layer with an opposite magnetization or by a laminated ferrimagnetic structure. The ferromagnetic layer or the laminated ferrimagnetic structure is made up of exchange-decoupled grains as the magnetic layer. In other words, the present invention uses an exchange pinning ferromagnetic layer or a ferrimagnetic multilayer to improve the thermal stability performance of the magnetic recording medium.

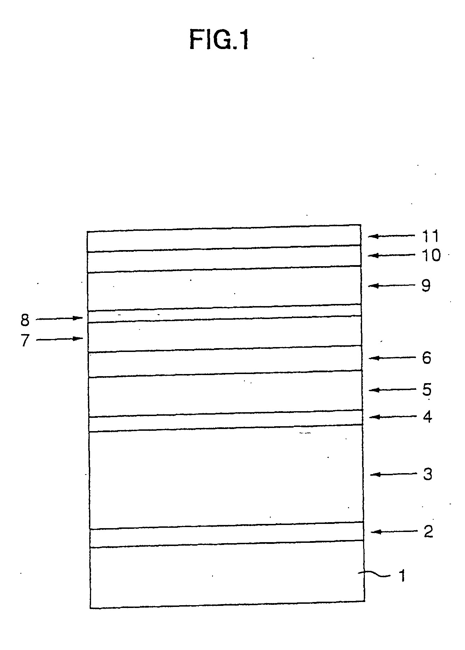

FIG. 1 is a cross sectional view showing an important part of a first example of a magnetic recording medium which does not embody the present invention, but which is useful in understanding it.

The magnetic recording medium includes a non-magnetic substrate 1, a first seed layer 2, a NiP layer 3, a second seed layer 4, an underlayer 5, a non-magnetic intermediate layer 6, a ferromagnetic layer 7, a non-magnetic coupling layer 8, a magnetic layer 9, a protection layer 10, and a lubricant layer 11 which are stacked in the order shown in FIG. 1.

For example, the non-magnetic substrate 1 is made of Al, Al alloy or glass. This non-magnetic substrate 1 may or may not be mechanically textured. The first seed layer 2 is made of Cr or Ti, for example, especially in the case where the non-magnetic substrate 1 is made of glass. The NiP layer 3 is preferably oxidized and may or may not be mechanically textured. The second seed layer 4 is provided to promote a (001) or a (112) texture of the underiayer 5 when using a B2 structure alloy such as NiAl and FeAl for the underlayer 5. The second seed layer 4 is made of an appropriate material similar to that of the first seed layer 2.

In a case where the magnetic recording medium is a magnetic disk, the mechanical texturing provided on the non-magnetic substrate 1 or the NiP layer 3 is made in a circumferential direction of the disk, that is, in a direction in which tracks of the disk extend.

The non-magnetic intermediate layer 6 is provided to further promote epitaxy, narrow the grain distribution of the magnetic layer 9, and orient the anisotropy axes of the magnetic layer 9 along a plane parallel to the recording surface of the magnetic recording medium. This non-magnetic intermediate layer 6 is made of a hcp structure alloy such as CoCr-M, where M = B, Mo, Nb, Ta, W, Cu or alloys thereof, and has a thickness in a range of 1 to 5 nm.

The ferromagnetic layer 7 is made of Co, Ni, Fe, Co-based alloy, Ni-based alloy, Fe-based alloy or the like. In other words, alloys such as CoCrTa, CoCrPt and CoCrPt-M, where M = B, Mo, Nb, Ta, W, Cu or alloys thereof may be used for the ferromagnetic layer 7. This ferromagnetic layer 7 has a thickness in a range of 2 to 10 nm. The non-coupling magnetic layer 8 is made of Ru, Ir, Rh, Cr, Cu, Ru-based alloy, Ir-based alloy, Rh-based alloy, Cu-based alloy, Cr-based alloy or the like. This non-magnetic coupling layer 8 preferably has a thickness in a range of 0.4 to 1.0 nm for antiparallel coupling using Ru, and preferably of the order of approximately 0.6 to 0.8 nm for an antiparallel coupling using Ru. For this particular thickness range of the non-magnetic coupling layer 8, the magnetizations of the ferromagnetic layer 7 and the magnetic layer 9 are antiparallel. The ferromagnetic layer 7 and the non-magnetic coupling layer 8 form an exchange layer structure.

For a ferromagnetic layer 7 made of a Fe-based alloy, Cr forms a better non-magnetic coupling layer 8. In this case, the Cr non-magnetic coupling layer 8 has an optimum thickness of approximately 1.8 nm.

The magnetic layer 9 is made of Co or a Co-based alloy such as CoCrTa, CoCrPt and CoCrPt-M, where M = B, Mo, Nb, Ta, W, Cu or alloys thereof. The magnetic layer 9 has a thickness in a range of 5 to 30 nm. Of course, the magnetic layer 9 is not limited to a single-layer structure, and a multi-layer structure may be used for the magnetic layer 9.

The protection layer 10 is made of C, for example. In addition, the lubricant layer 11 is made of an organic lubricant, for example, for use with a magnetic transducer such as a spin-valve head. The protection layer 10 and the lubricant layer 11 form a protection layer structure on the recording surface of the magnetic recording medium.

Obviously, the layer structure under the exchange layer structure is not limited to that shown in FIG. 1. For example, the underlayer 5 may be made of Cr or Cr-based alloy and formed to a thickness in a range of 5 to 40 nm on the substrate 1, and the exchange layer structure may be provided on this underlayer 5.

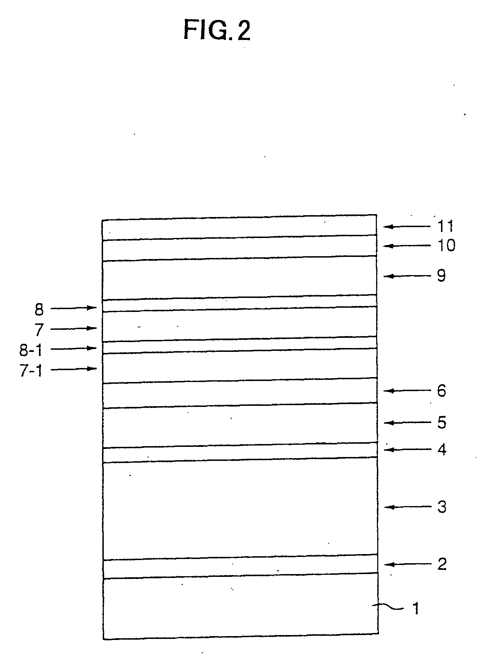

Next, a description will be given with reference to Fig. 2 of a second example of a magnetic recording medium which does not embody the present invention, but which is useful in understanding it.

In FIG. 2, those parts which are the same as those corresponding parts in FIG. 2 are designated by the same reference numerals, and a description thereof will be omitted.

In this second example of the magnetic recording medium, the exchange layer structure includes two non-magnetic coupling layers 8 and 8-1, and two ferromagnetic layers 7 and 7-1, which form a ferrimagnetic multilayer. This arrangement increases the effective magnetization and signal, since the magnetizations of the two non-magnetic coupling layers 8 and 8-1 cancel each other instead of a portion of the magnetic layer 9. As a result, the grain volume and thermal stability of magnetization of the magnetic layer 9 are effectively increased. More bilayer structures made up of the pair of ferromagnetic layer and non-magnetic coupling layer may be provided additionally to increase the effective grain volume, as long as the easy axis of magnetization is appropriately oriented for the subsequently provided layers.

The ferromagnetic layer 7-1 is made of a material similar to that of ferromagnetic layer 7, and has a thickness range selected similarly to the ferromagnetic layer 7. In addition, the non-magnetic coupling layer 8-1 is made of a material similar to that of the non-magnetic coupling layer 8, and has a thickness range selected similarly to the non-magnetic coupling layer 8. Within the ferromagnetic layers 7-1 and 7, the c-axes are preferably in-plane and the grain growth columnar.

In this example , the magnetic anisotropy of the ferromagnetic layer 7-1 is preferably higher than that of the ferromagnetic layer 7. However, the magnetic anisotropy of the ferromagnetic layer 7-1 may be the same as or be higher than that of, the magnetic layer 9.

Furthermore, a remanent magnetization and thickness product of the ferromagnetic layer 7 may be smaller than that of the ferromagnetic layer 7-1.

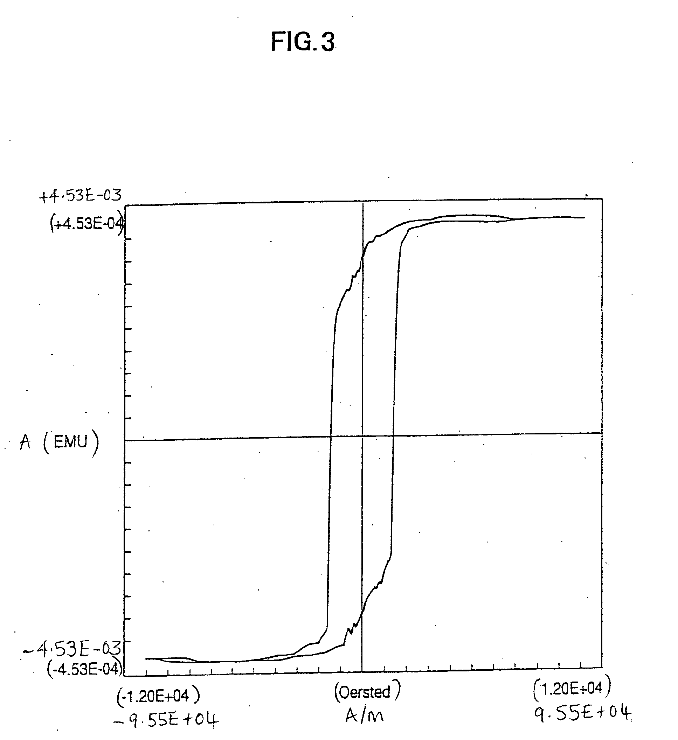

FIG. 3 is a diagram showing an in-plane magnetization curve of a single CoPt layer having a thickness of 10 nm on a Si substrate. In FIG. 3, the ordinate indicates the magnetization ( A). and the abscissa indicates the magnetic field (A/m). Conventional magnetic recording media show a behavior similar to that shown in FIG. 3.

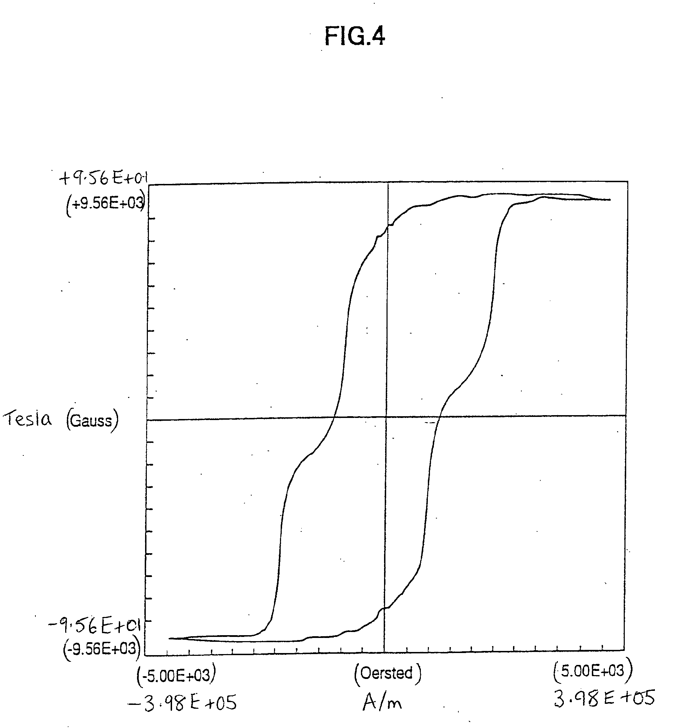

FIG. 4 is a diagram showing an in-plane magnetization curve of two CoPt layers separated by a Ru layer having a thickness of 0.8 nm, as in the case of the first embodiment of the magnetic recording medium. In FIG. 4, the ordinate indicates the magnetization (Tesla), and the abscissa indicates the magnetic field (A/m). As may be seen from FIG. 4, the loop shows shifts near the magnetic field which indicate the antiparallel coupling.

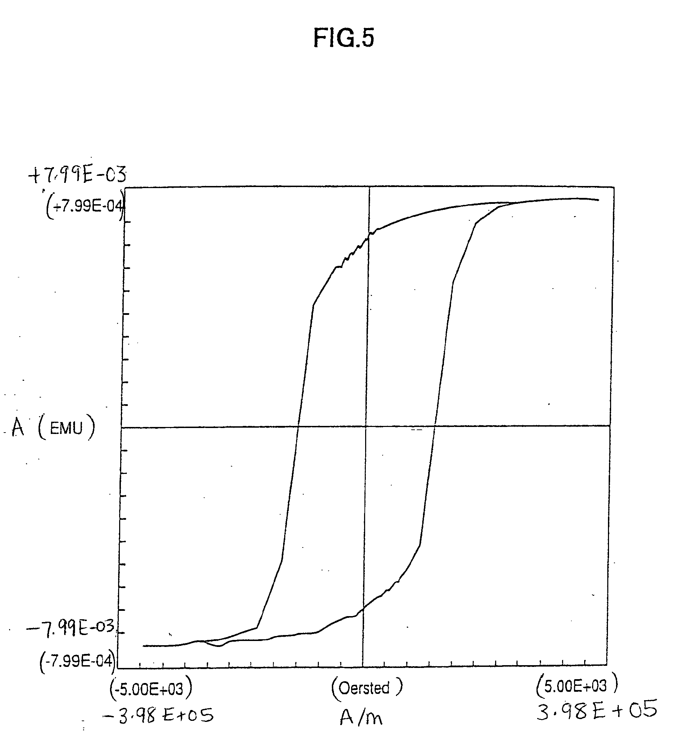

FIG. 5 is a diagram showing an in-plane magnetization curve of two CoPt layers separated by a Ru layer having a thickness of 1.4 nm. In FIG. 5, the ordinate indicates the magnetization ( A ), and the abscissa indicates the magnetic field (A/m). As may be seen from FIG. 5, the magnetizations of the two CoPt layers are parallel.

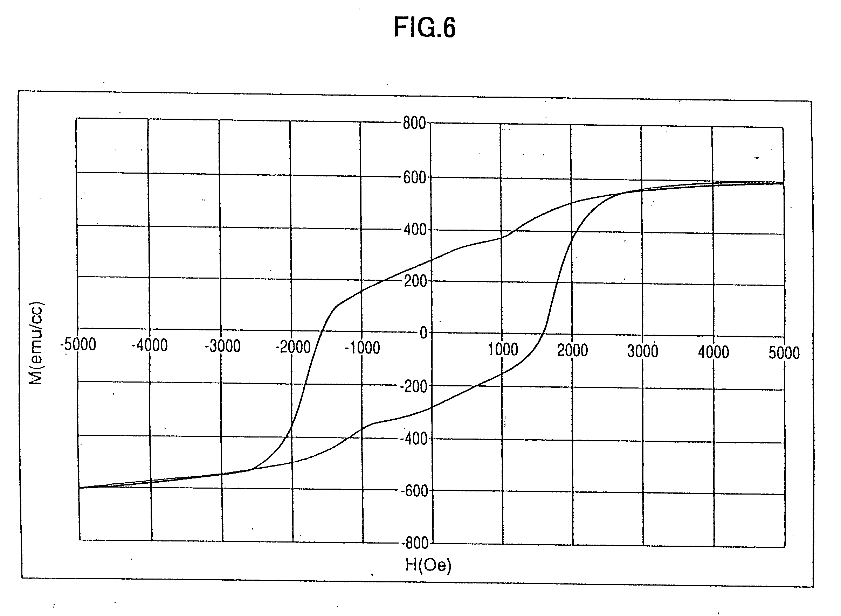

FIG. 6 is a diagram showing an in-plane magnetization curve for two CoCrPt layers separated by a Ru having a thickness of 0.8 nm, as in the case of the second embodiment of the magnetic recording medium. In FIG. 6, the ordinate indicates the magnetization (emu/cc), and the abscissa indicates the field (Oe). As may be seen from FIG. 6, the loop shows shifts near the field which indicate the antiparallel coupling. In FIG. 6 and following Figures, 1emu/cc = 1.OE+07Am⁻³ and 1Oe = 79.58A/m.

From FIGS. 3 and 4, it may be seen that the antiparallel coupling can be obtained by the provision of the exchange layer structure. In addition, it may be seen by comparing FIG. 5 with FIGS. 4 and 6 that the non-magnetic coupling layer 8 is desirably in the range of 0.4 to 1.0 nm in order to achieve the antiparallel coupling.

Therefore, according to the first and second examples described above, it is possible to effectively increase the apparent grain volume of the magnetic layer by the exchange coupling provided between the magnetic layer and the ferromagnetic layer via the non-magnetic coupling layer, without sacrificing the resolution. In other words, the apparent thickness of the magnetic layer is increased with regard to the grain volume of the magnetic layer so that a thermally stable medium can be obtained, and in addition, the effective thickness of the magnetic layer is maintained since cancellation of signals especially from the bottom layers is achieved. This allows higher linear density recording that is otherwise not possible for thick media. As a result, it is possible to obtain a magnetic recording medium with reduced medium noise and thermally stable performance.

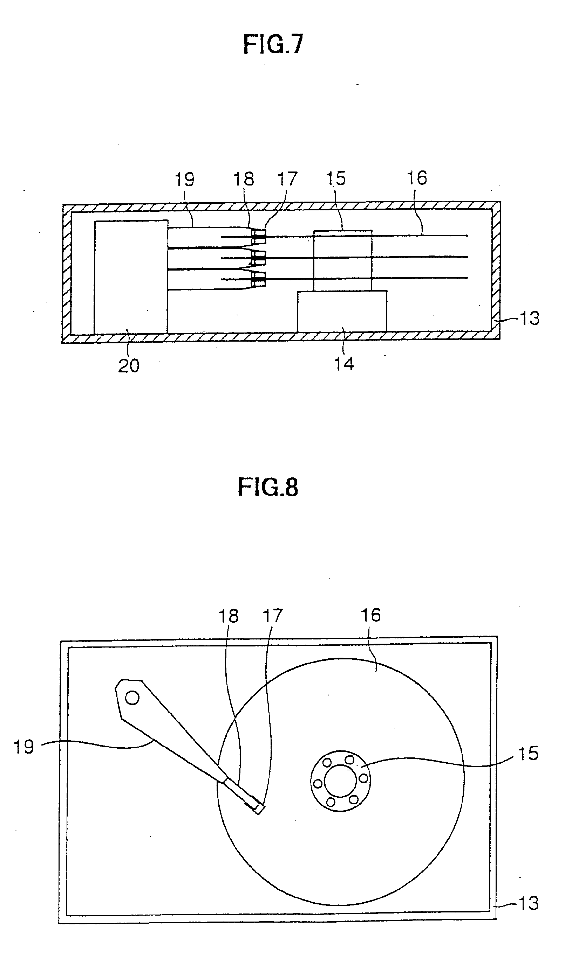

Next, a description will be given of magnetic storage apparatus, by referring to FIGS. 7 and 8. FIG. 7 is a cross sectional view showing an important part of this magnetic storage apparatus, and FIG. 8 is a plan view showing the important part of this magnetic storage apparatus.

As shown in FIGS. 7 and 8, the magnetic storage apparatus generally includes a housing 13. A motor 14, a hub 15, a plurality of magnetic recording media 16, a plurality of recording and reproducing heads 17, a plurality of suspensions 18, a plurality of arms 19, and an actuator unit 20 are provided within the housing 13. The magnetic recording media 16 are mounted on the hub 15 which is rotated by the motor 14. The recording and reproducing head 17 is made up of a reproducing head such as a MR or GMR head, and a recording head such as an inductive head. Each recording and reproducing head 17 is mounted on the tip end of a corresponding arm 19 via the suspension 18. The arms 19 are moved by the actuator unit 20. The basic construction of this magnetic storage apparatus is known, and a detailed description thereof will be omitted in this specification.

This magnetic storage apparatus is characterized by the magnetic recording media 16. Each magnetic recording medium 16 has the structure of the first or second embodiment of the magnetic recording medium described above in conjunction with FIGS. 1 and 2. Of course, the number of magnetic recording media 16 is not limited to three, and only one, two or four or more magnetic recording media 16 may be provided. Further, each magnetic recording medium 16 may have the structure of any of the embodiments of the magnetic recording medium which will be described later.

The basic construction of the magnetic storage unit is not limited to that shown in FIGS. 7 and 8. In addition, the magnetic recording medium used in the present invention is not limited to a magnetic disk.

Next, a description will be given of further features of the present invention, in comparison with the conventional magnetic recording medium having no exchange layer structure. In the following description, the ferromagnetic layer of the exchange layer structure and the magnetic layer will also be referred to as ferromagnetic layers forming a magnetic layer structure.

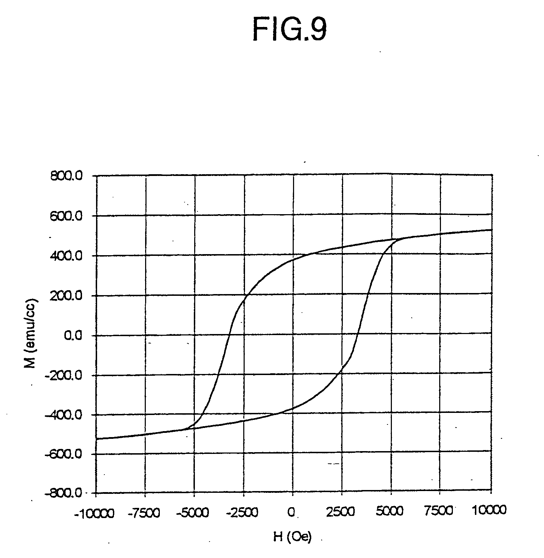

FIG. 9 is a diagram showing an in-plane magnetization curve for a magnetic recording medium having a single layer of CoCrPtB grown on a NiAl layer on glass. In FIG. 9, the ordinate indicates the magnetization M (emu/cc), and the abscissa indicates the magnetic field H (Oe). Similar M-H curves are observed for a single Co-based layer grown on a Cr underlayer on NiP coated Al substrate or NiP coated glass substrate.

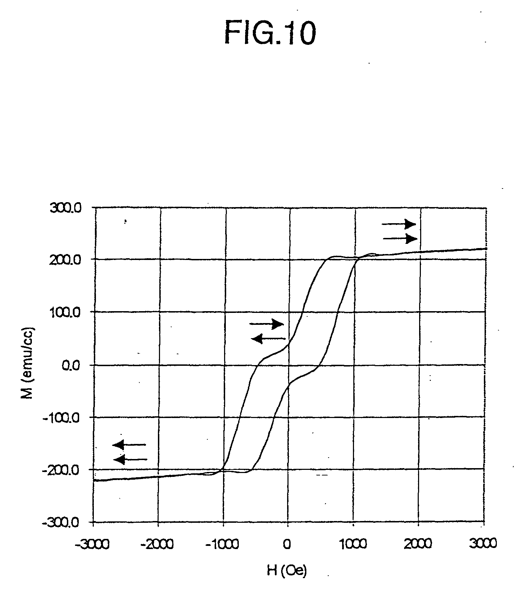

On the other hand, FIG. 10 is a diagram showing an in-plane magnetization curve for a magnetic recording medium having two ferromagnetic layers of CoCrPtB separated by a Ru layer having a thickness of 0.8 nm, sputtered on a NiP coated Al-Mg substrate. In FIG. 10, the ordinate indicates the magnetization M (emu/cc), and the abscissa indicates the magnetic field H (Oe). As may be seen from FIG. 10, the magnetization M abruptly decreases when the magnetic field H is around H=500 Oe which indicates an exchange coupling field of approximately 1000 Oe. The reduced magnetization M at H=0 evidences the anti-parallel coupling.

The optimum Ru thickness for the negative coupling can be determined not only by magnetometry but also by spin stand methods. The reproduced signal at low densities gives an indication of a remanent magnetization and thickness product Mr δ, where Mr denotes the remanent magnetization and δ denotes the effective thickness of the CoCrPtB layer, that is the ferromagnetic layer of the magnetic layer structure. If the Ru thickness is varied while the thicknesses of the two CoCrPtB layers are maintained constant, the reproduced signal shows a dip at the optimum Ru thickness. The optimum Ru thickness may depend on the magnetic materials and the processing used to form the ferromagnetic layers of the magnetic layer structure. For CoCrPt-based alloys manufactured above 150°C, the antiparallel coupling is induced for the Ru thickness in a range of approximately 0.4 to 1.0 nm.

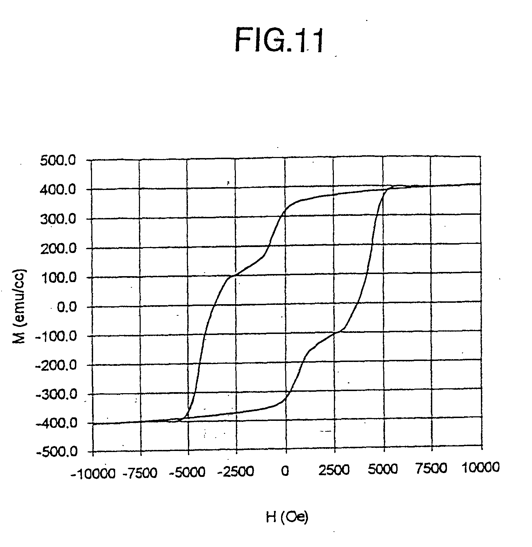

FIG. 11 is a diagram showing an in-plane magnetization curve for a magnetic recording medium having two ferromagnetic layers of CoCrPtB separated by a Ru layer, on a NiP coated Al substrate. In FIG. 11, the ordinate indicates the magnetization M (emu/cc), and the abscissa indicates the magnetic field H (Oe). FIG. 11 shows a case where a first CoCrPtB layer closer to the substrate is 8 nm thick, the Ru layer is 0.8 nm thick, and a second CoCrPtB layer further away from the substrate is 20 nm thick.

In this case, antiparallel coupling is observed but at higher negative magnetic fields. Unless the demagnetizing fields inside bits are very high, the antiparallel coupling is not completely achieved and very high reproduced signals are observed as the magnetizations in both the first and second CoCrPtB layers point in essentially the same direction. It is therefore necessary to reduce the coercivity Hc of the first CoCrPtB layer by reducing the thickness thereof or, by use of compositions which result in a lower coercivity Hc. For CoCrPt-based materials, the latter is usually achieved by increasing the Cr content and/or reducing the Pt content.

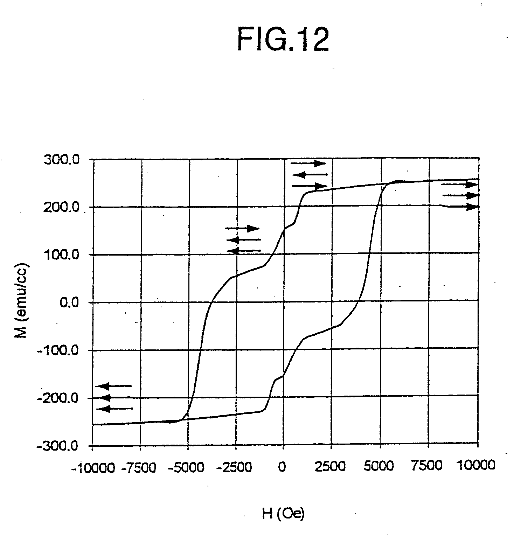

FIG. 12 is a diagram showing an in-plane magnetization curve for a magnetic recording medium having three ferromagnetic layers of CoCrPtB separated by a Ru layer between each two adjacent CoCrPtB layers, on a NiP coated Al substrate. In FIG. 12, the ordinate indicates the magnetization M (emu/cc), and the abscissa indicates the magnetic field H (Oe). FIG. 12 shows a case where first and second CoCrPtB layers closer to the substrate are 6 nm thick, a top third CoCrPtB layer is 20 nm thick, and the Ru layers between the first and second CoCrPtB layers and between the second and third CoCrPtB layers respectively are 0.8 nm thick. In this case, the magnetization M drops when the magnetic field H is H=500 Oe, which indicates that one of the first through third CoCrPtB layers reversed magnetization at positive fields. It is likely the middle second CoCrPtB layer which reversed magnetization since this middle second CoCrPtB layer is subject to a stronger reversing field due to the two interfaces. The interlayer interaction is therefore 500 Oe greater than the coercivity Hc of the middle second CoCrPtB layer.

However, at low negative magnetic fields, the bottom first CoCrPtB layer starts reversing magnetization, such that at approximately -1000 Oe, the magnetization of only the top third CoCrPtB layer is not reversed. Preferably, the bottom first CoCrPtB layer should not reverse magnetization at magnetic fields which are low compared to the demagnetizing fields inside bits, and this may be achieved for example by choosing the proper thickness and/or composition for the bottom first CoCrPtB layer. A magnetic recording medium which has these three ferromagnetic layers tends to have read-write performance which is better than a magnetic recording medium which only has a single ferromagnetic (magnetic) layer with no exchange coupling. There is a possibility that the reproduced signal will be reduced with time as more grains change layer magnetization configuration from parallel to antiparallel which is more stable. However, a solitary wave media signal-to-noise ratio (SNR) Siso/Nm of the magnetic recording medium is expected to be maintained since the medium noise level is also correspondingly reduced. Hence, the bit error rate (BER) which is intimately related to the isolated wave medium SNR Siso/Nm will not be degraded.

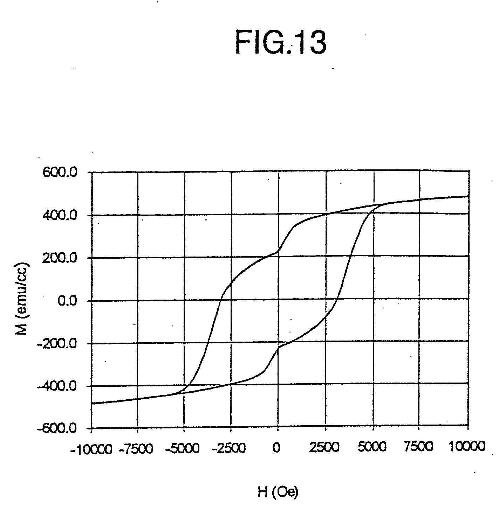

FIG. 13 is a diagram showing an in-plane magnetization curve for a magnetic recording medium having two negatively coupled ferromagnetic layers of CoCrPtB separated by a Ru layer, on a NiAl coated glass substrate. In FIG. 13, the ordinate indicates the magnetization M (emu/cc), and the abscissa indicates the magnetic field H (Oe). As shown in FIG. 13, the bottom CoCrPtB layer closer to the substrate reverses magnetization even before the magnetic field H becomes H=0 Oe.

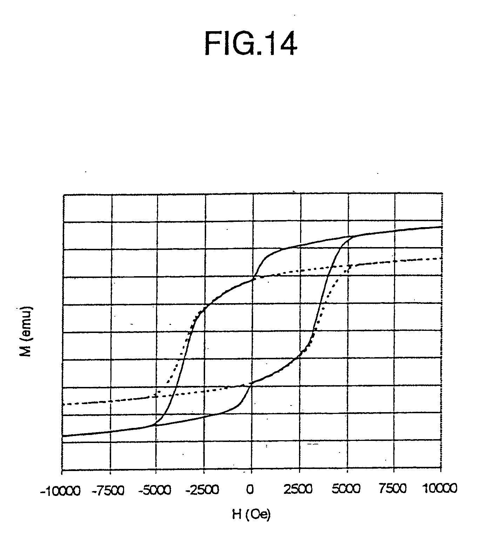

FIG. 14 is a diagram showing an in-plane magnetization curve shown in FIG. 13 in comparison with a magnetic recording medium having a single ferromagnetic layer of CoCrPtB on a NiAl coated glass substrate fabricated similarly to the recording medium having the two negatively coupled ferromagnetic layers. In FIG. 14, the ordinate indicates the magnetization M (emu/cc), and the abscissa indicates the magnetic field H (Oe). In FIG. 14. the in-plane magnetization curve shown in FIG. 13 is indicated by a solid line, and an in-plane magnetization curve for the recording medium with the single ferromagnetic layer is indicated by a dashed line. In FIG. 14, the saturation magnetization is normalized so as to illustrate the similarity of the M-H curve portions relevant to the magnetic recording.

When a head saturates a portion of the magnetic recording medium having the two negatively coupled ferromagnetic layers, the magnetization of both the two ferromagnetic layers is in the head field direction, but as soon as the head field is no longer applied, the bottom ferromagnetic layer reverses magnetization and the situation inside a bit would be similar to that of the magnetic recording medium having the single ferromagnetic layer. A read head only senses the resultant magnetization. A person skilled in the art can therefore tune the thickness, composition and processing of the ferromagnetic layers, so that the magnetic recording medium behaves similarly to the conventional magnetic recording medium but with an enhanced thermal stability.

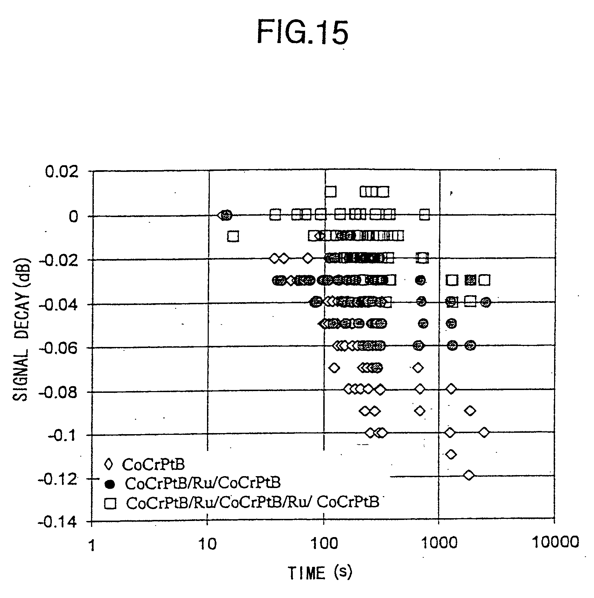

FIG. 15 is a diagram showing signal decays of magnetic recording media having two and three ferromagnetic layers, in comparison with a signal decay of a magnetic recording medium having the single ferromagnetic layer. In FIG. 15, the ordinate indicates the signal decay (dB) of the reproduced signal for 207 kfci bits, and the abscissa indicates the time (s). In FIG. 15, ◇ indicates the data of the magnetic recording medium having the single CoCrPtB layer which is 10 nm thick, ● indicates the data of the magnetic recording medium having the bottom first CoCrPtB layer which is 10 nm thick, the Ru layer which is 0.8 nm thick and the top second CoCrPtB layer which is 4 nm thick, and □ indicates the data of the magnetic recording medium having the bottom first CoCrPtB layer which is 10 nm thick, the first Ru layer which is 0.8 nm thick, the middle CoCrPtB layer which is 4 nm thick, the second Ru layer which is 0.8 nm thick and the top. third CoCrPtB layer which is 4 nm thick. The ferromagnetic layer compositions are all the same, and the coercivity Hc measured with a Kerr magnetometer are approximately 2700 Oe (214.8 kA/m) and are similar. As may be seen from FIG. 15, the magnetic recording media having two ferromagnetic layers and three ferromagnetic layers show more thermally stable characteristics as the effective volume is increased, as compared to the magnetic recording medium having the single ferromagnetic layer and no exchange coupling.

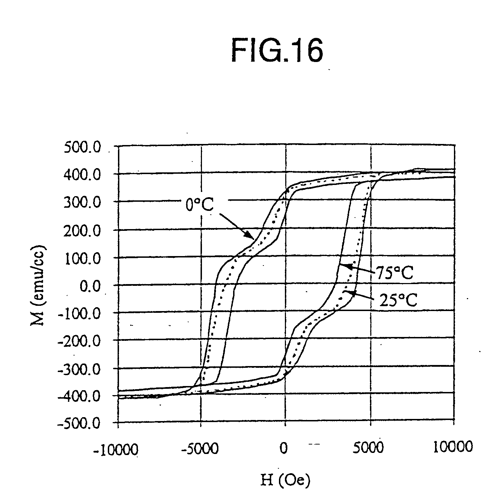

FIG. 16 is a diagram showing M-H curves of a magnetic recording medium having the two negatively coupled ferromagnetic layers at different temperatures. In FIG. 16, the ordinate indicates the magnetization M (emu/cc), the abscissa indicates the magnetic field H (Oe), and the data are shown for three different temperatures which are 0'C, 25°C and 75°C. A strong negative coupling is observed over a wide temperature range, and covers the range useful for magnetic recording media such as disks and tapes.

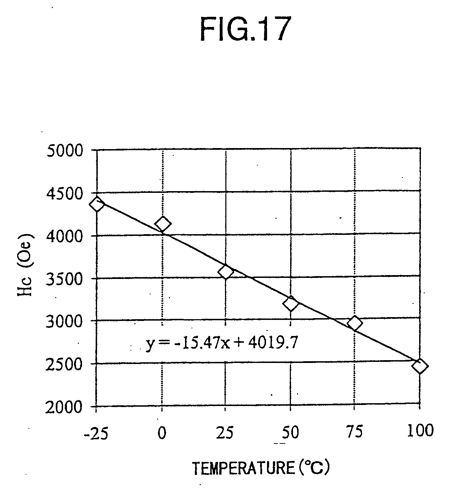

FIG. 17 is a diagram showing the temperature dependence of the coercivity for the magnetic recording medium having the characteristics shown in FIG. 16. In FIG. 17, the ordinate indicates the coercivity Hc (Oe), and the abscissa indicates the measured temperature (°C). In addition, y=Hc and x=temperature in the expression y=-15.47x+4019.7. The coercivity changes with temperature dHc/dT=15.5 Oe/°C and is less than that of the magnetic recording medium having the single ferromagnetic layer. A typical dHc/dT for the magnetic recording medium having the single ferromagnetic layer is 16 to 17 Oe/°C. Accordingly, it may be clearly seen that the improved dHc/dT value obtained for the magnetic recording medium having the two negatively coupled ferromagnetic layers primarily arises from the increased effective volume.

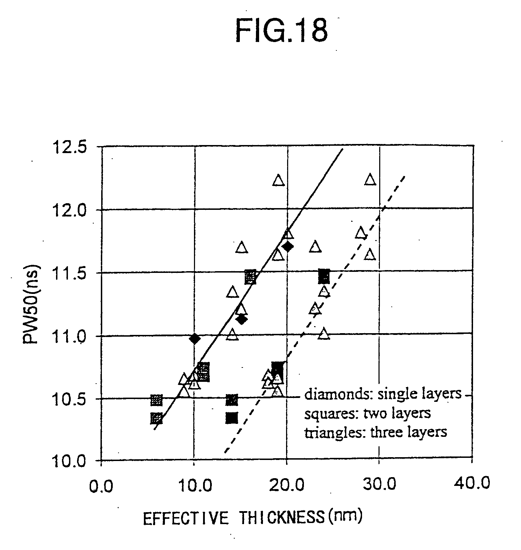

FIG. 18 is a diagram showing the PW50 dependence on the effective and total ferromagnetic layer thickness of the magnetic recording media having two and three ferromagnetic layers, in comparison with the PW50 dependence on the effective and total ferromagnetic layer thickness of the magnetic recording medium having the single ferromagnetic layer. In FIG. 18, the ordinate indicates the PW50 (ns), and the abscissa indicates the effective and total ferromagnetic layer thickness (nm). In FIG. 18, ◆ indicates the data of the magnetic recording medium having the single ferromagnetic layer, ■ indicates the data of the magnetic recording medium having two exchange-coupled ferromagnetic layers, and Δ indicates the data of the magnetic recording medium having three exchange-coupled ferromagnetic layers. The thickness and composition of the ferromagnetic layers are basically the same as those used to obtain the data shown in FIG. 15. For the data on the left side along the solid line, the thickness used is the effective thickness, that is magnetization cancellation due to an antiparallel configuration is assumed. Significant correlation is observed validating the assumption. When the total thickness of the ferromagnetic layer or layers is used, the data shifts to the right along the dotted line, which give unreasonably small PW50 values for the thicknesses involved when compared to those of the magnetic recording medium having the single ferromagnetic layer.

Therefore, although the writing resolution may be degraded due to the increased media thickness, the reading resolution is not, since cancellation of the signals from the lower layers occurs which may also explain the improved isolated wave medium SNR Siso/Nm over the magnetic recording medium having the single ferromagnetic layer. The isolated wave medium SNR Siso/Nm of the magnetic recording medium having the two exchange-coupled ferromagnetic layers and very low effective Mr δ is especially improved over that of the magnetic recording medium having the single ferromagnetic layer. Such a very low effective Mr δ can be achieved when the two ferromagnetic layers have almost the same Mr δ. For the magnetic recording medium having the three exchange-coupled ferromagnetic layers, the performance is enhanced when the sum of the thicknesses of the bottom first and middle second ferromagnetic layers is not so different from the thickness of the top third ferromagnetic layer. This phenomenon is consistent with a similar phenomenon which occurs in double uncoupled layers since the best thickness combination of the double uncoupled layers is when both layers are of the same thickness.

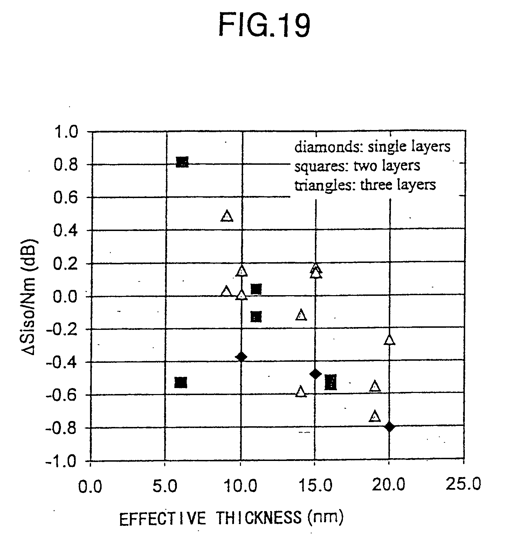

FIG. 19 is a diagram showing the effective thickness dependence of the change in isolated wave medium SNR. In FIG. 19, the ordinate indicates the change Δ Siso/Nm (dB) of the isolated wave medium SNR Siso/Nm, and the abscissa indicates the effective thickness (nm) of the ferromagnetic layers. In FIG. 19, the same symbols ◆, ■ and Δ are used to indicate the data of the three different magnetic recording media as in FIG. 18. It may be seen from FIG. 19 that good isolated wave medium SNR Siso/Nm is especially observed for the magnetic recording medium having the two exchange-coupled ferromagnetic layers with low Mr δ. Although the total thickness of the ferromagnetic layers in this case becomes greater than that of the magnetic recording medium having the single ferromagnetic layer, the read-write performance is hardly degraded, and in some cases even improved.

The present inventors have also found that, when at least one of the ferromagnetic layers of the magnetic layer structure is made up of a plurality of ferromagnetic layers which are in contact with each other and ferromagnetically coupled, a good performance is obtained especially when the lower ferromagnetic layer is Cr-rich such that the Cr content is 23 at% or greater, and the Cr content of the upper ferromagnetic layer is less. This indicates the crucial role of the lower ferromagnetic layer. According to the experiments conducted by the present inventors, it was found that the noise arising from imperfections in the lower ferromagnetic layer is effectively reduced due to cancellation from the succeeding ferromagnetic layers. In other words, it may be regarded that the lower layers form a large source of noise, but this embodiment can improve the SNR because the signals from the lower layers are cancelled such that most of the signals and thus also noise come from the upper layers.

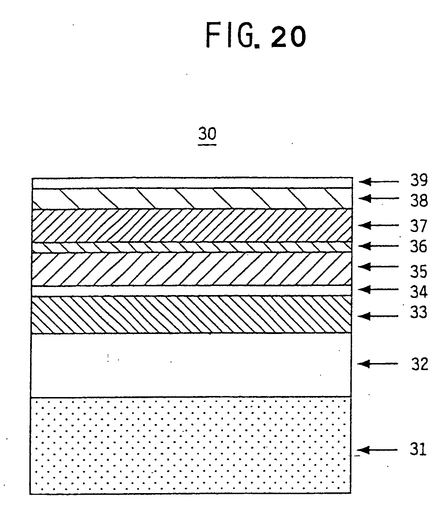

Next, the prior art will be briefly summarized before explaining features of the present invention in conjunction with FIGS. 20 through 23.

Due to the development of the information processing technology, there are increased demands for high-density magnetic recording media. Characteristics required of the magnetic recording media to satisfy such demands include low noise, high coercivity, high remanence magnetization, and high resolution.

Conventionally, various measures have been proposed to reduce the noise in the magnetic recording media. A general magnetic recording medium basically includes a non-magnetic substrate made of Al or the like, and an underlayer, a magnetic recording layer, a protection layer and a lubricant layer which are stacked in this order on the substrate. For example, with respect to the underlayer, functions such as promoting the in-plane orientation of the magnetic recording layer and increasing the remanence magnetization and thermal stability of written bits are demanded, in order to improve the magnetization characteristic of the magnetic recording layer. When a suitable underlayer is used, it is possible to reduce the thickness of the magnetic recording layer or, to reduce the size of the magnetic grains and the grain size distribution width of the magnetic recording layer, thereby enabling noise reduction.

In addition, there are proposals to increase the resolution by reducing the thickness of the magnetic layer or, to reduce the transition width between the written bits. There are also proposals to promote the Cr segregation of the CoCr-based alloy which forms the magnetic recording layer, so as to reduce the exchange coupling among the magnetic grains. These proposals have been made to reduce noise from various aspects.

As one technique which is effective in reducing noise, there is a proposal to employ a multi-layer structure for the magnetic recording layer, by separating the magnetic recording layer into upper and lower portions by a separation layer. By employing the multi-layer structure with the separation layer for the magnetic recording layer, it is possible to separate the magnetic coupling of the magnetic layers, and to positively reduce the noise.

However, in the magnetic recording layer having the multi-layer structure, a non-magnetic material such as CoCr-based alloys and Cr-based alloys are used for the separation layer. However, such non-magnetic materials easily mix with the magnetic layers which are provide above and below, thereby deteriorating the magnetic characteristics of the magnetic recording layer, and there was a problem in that the reproduced output obtained from such a magnetic recording medium is deteriorated thereby. Furthermore, the non-magnetic materials such as the CoCr-based alloys and Cr-based alloys virtually separate completely the magnetic coupling of the magnetic layers provided above and below. Hence, although such non-magnetic materials are preferable from the point of reducing the noise, the magnetic layers provided above and below become thermally unstable as a results. Consequently, in the case of a magnetic recording medium such as a magnetic disk which may be used under a relatively high temperature environment, there was a problem in that the detection sensitivity of written bits deteriorates due to the provision of such a separation layer.

According to an embodiment of a magnetic recording medium according to the present invention, which has a magnetic recording layer with a multi-layer structure, the noise can be reduced while maintaining the desired thermal stability and magnetic characteristics.

In the first and second examples discussed previous the magnetic recording medium comprises at least one exchange layer structure, and a magnetic layer provided on the exchange layer structure, wherein the exchange layer structure includes a ferromagnetic- layer and a non-magnetic coupling layer provided on the ferromagnetic layer and under the magnetic layer, and the magnetization directions of the ferromagnetic layer and the magnetic layer are mutually antiparallel.

In the first and second examples, for a particular Ru or Ir layer thickness between two ferromagnetic layers, the magnetizations can be made parallel or antiparallel. For example, for a structure made up of two ferromagnetic layers of different thickness with antiparallel magnetizations, the effective grain size of a magnetic recording medium can be increased without significantly affecting the resolution. A signal amplitude reproduced from such a magnetic recording medium is reduced due to the opposite magnetizations, but this can be rectified by adding another layer of appropriate thickness and magnetization direction, under the laminated magnetic layer structure, to thereby cancel the effect of one of the layers. As a result, it is possible to increase the signal amplitude reproduced from the magnetic recording medium, and to also increase the effective grain volume. Thermally stable written bits can therefore be realized.

The first and second examples increase the thermal stability of written bits by exchange coupling the magnetic layer to another ferromagnetic layer with an opposite magnetization or by a laminated ferrimagnetic structure. The ferromagnetic layer or the laminated ferrimagnetic structure is made up of exchange-decoupled grains as the magnetic layer. In other words, the first and second embodiments use an exchange pinning ferromagnetic layer or a ferrimagnetic multilayer to improve the thermal stability performance of the magnetic recording medium.

In the embodiment of the present invention described hereunder, the above findings associated with the first and second examples are effectively utilized, by noting that the magnetization directions of the two ferromagnetic layers become mutually parallel when the layer made of Ru or the like provided between the two ferromagnetic layer has a specific thickness. Accordingly, the embodiment also employs a layer structure similar to the basic layer structure of the first and second examples . The magnetic layer, the non-magnetic coupling layer and the ferromagnetic layer of the first and second examples respectively correspond to the (first) magnetic recording layer, the non-magnetic separation layer and the (second) magnetic recording layer of the present embodiment, but the functions of the layers of the present embodiment differ from those of the first and second examples.

The basic structure of the present embodiment of a magnetic recording medium according to the present invention includes a non-magnetic substrate, an underlayer, a magnetic recording layer, a protection layer and a lubricant layer which are stacked in this order, similarly to the conventional magnetic recording medium, but the magnetic recording layer has a multi-layer structure.

FIG. 20 is a cross sectional view showing an important part of this embodiment of the magnetic recording medium according to the present invention. A magnetic recording medium 30 includes a non-magnetic substrate 31, a NiP layer 32, an underlayer 33, a non-magnetic intermediate layer 34, a second magnetic recording layer 35, a non-magnetic separation layer 36, a first magnetic recording layer 37, a protection layer 38, and a lubricant layer 39 which are stacked in this order as shown in FIG. 20.

A magnetic recording layer of this magnetic recording medium 30 has a 3-layer structure, including the second magnetic recording layer 35, the non-magnetic separation layer 36 and the first magnetic recording layer 37. As will be described later, the upper first magnetic recording layer 37 and the lower second magnetic recording layer 35 are magnetically coupled via the non-magnetic separation layer 36, and magnetization directions of the first and second magnetic recording layers 37 and 35 are parallel (in the same direction). When the magnetic recording medium 30 is formed as a magnetic disk and signals are recorded thereon by a magnetic head, the first and second magnetic recording layers 37 and 35 which are in the above described relationship are fixed along the recording magnetization while maintaining the mutually parallel state. The magnetization states of the first and second magnetic recording layers 37 and 35 are read at the time of the signal reproduction.

Because the first and second magnetic recording layers 37 and 35 are separated by the non-magnetic separation layer 36, low noise is realized by the effects of magnetic separation. However, unlike the conventional non-magnetic separation layer made of CoCr-based alloys or Cr-based alloys, a magnetic coupling which is sufficient to maintain the mutually parallel magnetization states of the first and second magnetic recording layers 37 and 35 exists in the case of this embodiment. As a result, the thermal stability is improved, and the reliability of the magnetic recording medium 30 is improved over the conventional magnetic medium since the magnetic characteristics desired of the magnetic recording layer can be maintained in this embodiment even under a relatively high temperature environment.

In the magnetic recording layer having the multi-layer structure, two or more non-magnetic separation layers may be provided. For example, when providing two non-magnetic separation layers, the magnetic recording layer is formed by first, second and third magnetic recording layers, and a first non-magnetic separation layer is interposed between the first and second magnetic recording layers, while a second non-magnetic separation layer is interposed between the second and third magnetic recording layers.

Returning now to the description of the magnetic recording medium 30 shown in FIG. 20, the non-magnetic substrate 31 is made of a non-magnetic material such as Al, Al alloy and glass. The non-magnetic substrate 31 may or may not be mechanically textured.

The NiP layer 32 is made of NiP, but may be replaced by a layer made of a material such as NiAl and FeAl having the B2 structure. The NiP layer 32 may or may not be mechanically textured. In the case where the magnetic recording medium 30 is a magnetic disk and the mechanical texturing is to be made, the non-magnetic substrate 31 and the NiP layer 32 are mechanically textured in the circumferential direction of the magnetic disk, that is, in a direction in which a track on the magnetic disk is formed.

The underlayer 33 is made of at least one layer of a Cr-based alloy. For example, the underlayer 33 may be made of a Cr-M alloy, where M = Mo, Fe, Mn, Ti, V, W or alloys thereof.

The non-magnetic intermediate layer 34 is provided to promote the epitaxial growth of the first and second magnetic recording layers 37 and 35, reduction of the grain size distribution width, and orientation of the anisotropy axes (axis of easy magnetization) of the magnetic recording layer in a plane parallel to the recording surface of the magnetic recording medium 30. The non-magnetic intermediate layer 34 is made of a CoCr-M alloy having the hcp structure, where M = B, Mn, Mo, Nb, Ta, Ti, W or alloys thereof, and has a thickness in a range of approximately 1 to 5 nm. It is not essential to provide the non-magnetic intermediate layer 34, and it is possible to omit the non-magnetic intermediate layer 34.

The second magnetic recording layer 35 is made of a material such as Co, Ni, Fe, Co-based alloys, Ni-based alloys and Fe-based alloys, In other words, Co and Co-based alloys including CoCrTa, CoCrPt and CoCrPt-M may be used for the second magnetic recording layer 35, where M = B, Mo, Nb, Ta, W or alloys thereof. Preferably, the second magnetic recording layer 35 has a thickness in a range of approximately 2 to 10 nm.

The non-magnetic separation layer 36 is made of a material such as Ru, Rh, Ir and alloys thereof. When using Ru for the non-magnetic separation layer 36, the thickness of the non-magnetic separation layer 36 is preferably set in a range of approximately 0.2 to 0.4 nm or approximately 1.0 to 1.7 nm. By setting the thickness of the non-magnetic separation layer 36 to such a range, it is possible to set the magnetization directions of the second magnetic recording layer 35 and the first magnetic recording layer 37 to become mutually parallel.

The first magnetic recording layer 37 may be made of a material such as Co, and Co-based alloys including CoCrTa, CoCrPt and CoCrPt-M, similarly to the second magnetic recording-layer 35, where M = B, Mo, Nb, Ta, W or alloys thereof. Preferably, the first magnetic recording layer 37 has a thickness in a range of approximately 5 to 30 nm. The first magnetic recording layer 37 is not limited to a single-layer structure, and the first magnetic recording layer 37 itself may have a multi-layer structure.

The materials forming the first and second magnetic recording layers 37 and 35 may be the same or, may be mutually different.

The protection layer 38 is made of a C-based material, for example. In addition, the lubricant layer 39 is made of an organic lubricant agent to enable use of the magnetic recording medium 30 with a magnetic transducer such as a spin valve head. The protection layer 38 and the lubricant layer 39 form a protection layer structure of the magnetic recording medium 30.

The layer structure of an embodiment of the magnetic recording medium according to the present invention is of course not limited to that shown in FIG. 20. For example, the underlayer 33 may be made of Cr or a Cr-based alloy, and formed to a thickness in a range of approximately 5 to 40 nm. The second magnetic recording layer 35 may be provided on such an underlayer 33.

Next, a description will be given of a method of producing the magnetic recording medium 30. The layers formed on the substrate 31 of the magnetic recording medium 30, from the underlayer 33 up to the protection layer 38, may be formed by sputtering.

For example, after cleaning the NiP-plated Al substrate 31 which has a thickness of 0.8 mm and a diameter of 3.5 inches, a magnetron sputtering apparatus is used to heat the Al substrate 31 to a substrate temperature of 220°C, and the layers from the underlayer 33 up to the protection layer 38 are successively formed by sputtering. The NiP layer on the Al substrate 31 may be oxidized or mechanically textured. The sputtering is carried out at a pressure of 5 mTorr and a constant sputtering time of 4 seconds. The underlayer 33 is formed to a thickness of 10 nm by sputtering a material Cr₉₅Mo_{2.5}W_{2.5} to a thickness of 3 nm, and sputtering a material Cr₈₀Mo₁₀W₁₀ to a thickness of 7 nm. The non-magnetic intermediate layer 34 is formed to a thickness of 3 nm by sputtering a material Co₆₃Cr₃₇. The second magnetic recording layer 35 is formed to a thickness of 9.5 nm by sputtering a material Co₆₃Cr₂₂Pt₁₁B₄. The non-magnetic separation layer 36 is formed to a thickness selected within a range of 0.2 to 0.4 nm or 1.0 to 1.7 nm by sputtering Ru. The first magnetic recording layer 37 is formed to a thickness of 9.5 nm by sputtering a material Co₆₃Cr₂₂Pt₁₁B₄. Furthermore, the protection layer 38 is formed by sputtering a C-based material, and the lubricant layer 39 is formed by coating an organic lubricant agent on the protection layer 38.

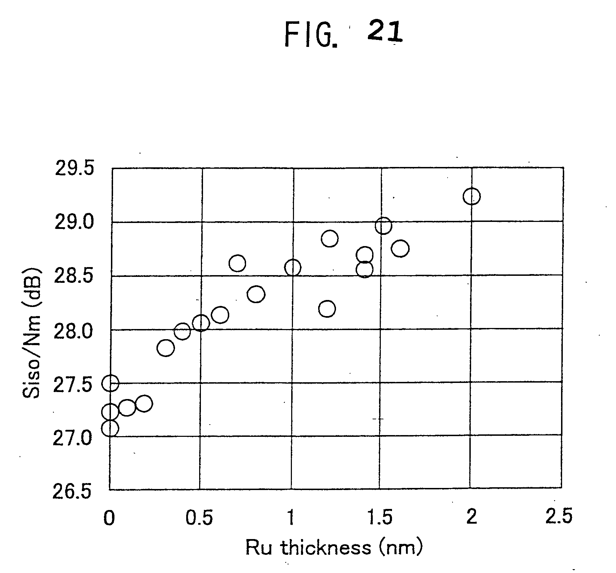

FIG. 21 is a diagram showing the relationship of a ratio Siso/Nm of the isolated wave output (Siso) and medium noise (Nm) of this embodiment of the magnetic recording medium 30 which is produced as described above and the thickness of the Ru non-magnetic separation layer 36. The ratio Siso/Nm is a ratio of the isolated wave output Siso at 270 kFCI and the medium noise Nm. It was confirmed from FIG. 21 that the noise is reduced, since the value of the ratio Siso/Nm increases as the thickness of the non-magnetic separation layer 36 increases.

As described above, when Ru is used for the non-magnetic separation layer 36, the magnetization directions of the first and second magnetic layers 37 and 35 disposed above and below the non-magnetic separation layer 36 become mutually parallel or mutually antiparallel depending on the thickness of the non-magnetic separation layer 36. In this embodiment, the magnetizations of the first and second magnetic recording layers 37 and 35 becomes mutually parallel by setting the thickness of the non-magnetic separation layer 36 to approximately 0.4 nm or less or approximately 1.0 nm or greater.

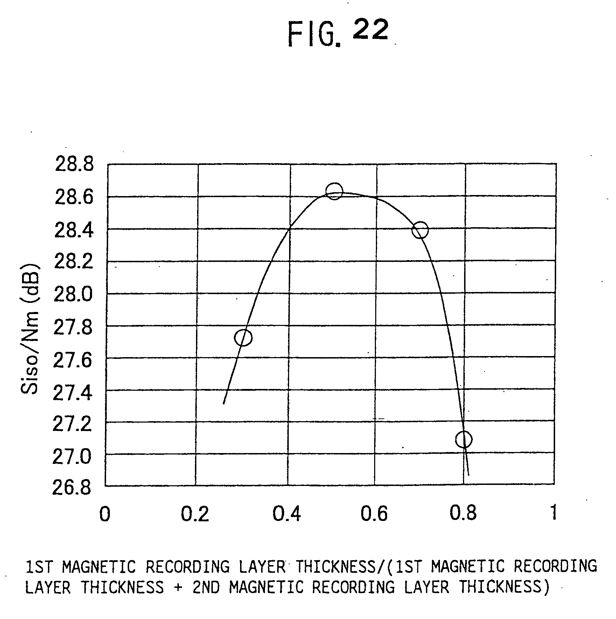

FIG. 22 is a diagram showing the relationship of a thickness ratio of first and second magnetic recording layers 37 and 35 and the ratio Siso/Nm of the isolated wave output (Siso) and medium noise (Nm), for a case where the same material Co₆₃Cr₂₂Pt₁₁B₄ is used for the first and second magnetic recording layers 37 and 35. In FIG. 22, the abscissa indicates a thickness ratio (thickness of the first magnetic recording layer 37)/{(thickness of the first magnetic recording layer 37)+(thickness of the second magnetic recording layer 35)}. It was confirmed from FIG. 22 that a high ratio Siso/Nm can be obtained when the thickness ratio is in a range of approximately 0.5 to 0.7.

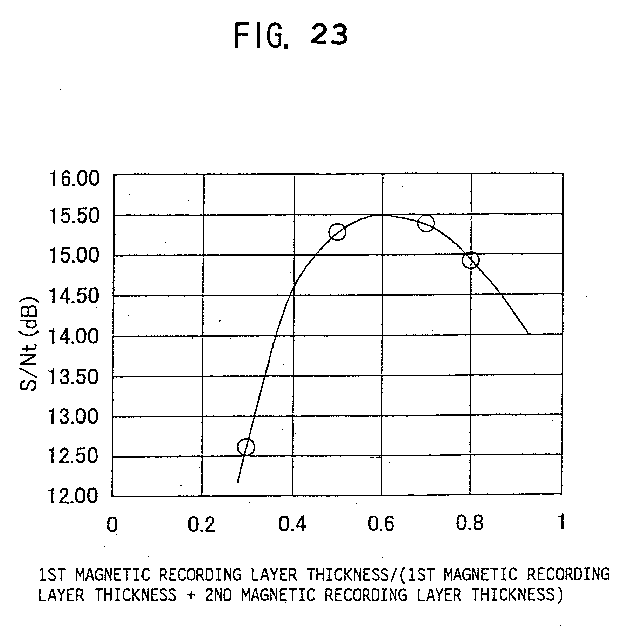

FIG. 23 is a diagram showing the relationship of the thickness ratio of the first and second magnetic recording layers 37 and 35 and a ratio S/Nt of an output (S) and noise (Nt). In FIG. 32, the abscissa is the same as that of FIG. 11. It was confirmed from FIG. 23 that a high ratio S/Nt can also be obtained when the thickness ratio is in a range of approximately 0.5 to 0.7.

From FIGS. 22 and 23, it was confirmed that the noise reducing effect is further improved when a thickness ratio of the thickness of the first magnetic recording layer 37 to the thickness of the second magnetic recording layer 35 is in a range of approximately 5:5 to 7:3. The thickness ratio is desirably set close to 5:5 from the point of view of realizing low noise, and is desirably set close to 7:3 from the point of view of realizing high resolution.

Therefore, according to the present invention, a non-magnetic separation layer which is made of Ru or the like and has a predetermined thickness maintains the magnetic coupling of magnetic recording layers above and below the non-magnetic separation layer to a mutually parallel state. Hence, it is possible to realize a magnetic recording medium having low noise and desired thermal stability. Compared to the conventional magnetic recording medium, this magnetic recording medium has a high reliability and is suited for high-density recording.

In addition, a magnetic storage apparatus which uses such a magnetic recording medium can cope with the demands of high-density recording, and enable magnetic recording and reproduction of information with a high sensitivity.

## Claims

1. A magnetic recording medium (30) comprising:
a substrate (31);
an underlayer (33) disposed above the substrate; and
a magnetic recording layer (37, 35) disposed above the underlayer (33);
**characterized in that**:
said magnetic recording layer (37, 35) has a multi-layer structure which is separated into at least upper (37) and lower (35) layers by a non-magnetic separation layer (36);
said non-magnetic separation layer (36) is made of a material selected from a group consisting of Ru, Rh, Ir and alloys thereof; and
the upper (37) and lower (35) layers of the multi-layer structure (37, 35) separated by the non-magnetic separation layer (36) have magnetization directions which are mutually parallel.

2. The magnetic recording medium as claimed in claim 1, wherein said non-magnetic separation layer (36) has a thickness in a range of approximately 0.2 to 0.4 nm or approximately 1.0 to 1.7nm.

3. The magnetic recording medium as claimed in claim 1 or 2, wherein said magnetic recording layer (37, 35) is separated into an upper first magnetic recording layer (37) and a lower second magnetic recording layer (35) by said non-magnetic separation layer (36), and a thickness ratio of a thickness of the first magnetic recording layer (37) to a thickness of the second magnetic recording layer (35) is in a range of approximately 5:5 to 7:3 when the first and second magnetic recording layers (37, 35) are made of the same magnetic material.
